# FASCICULE DE BREVET EUROPEEN

(11) **EP 0 532 381 B1**
(45) Date de publication et mention de la délivrance du brevet: **30.03.1994**
(21) Numéro de dépôt: 92402367.4
(22) Date de dépôt: 31.08.1992
(51) Int. Cl.: H04N 1/32, H04N 1/42

(54) **Procédé et dispositif de certification des messages transmis par télécopie**
Verfahren und Vorrichtung zum Beglaubigen von Nachrichten die durch ein Faksimilegerät übertragen werden
Method and apparatus for certifying messages transmitted by a facsimile device

(30) Priorité: 12.09.1991 FR 9111275
(43) Date de publication de la demande: 17.03.1993
(73) Titulaire: GEMPLUS CARD INTERNATIONAL, F-13420 Gémenos (FR)
(72) Inventeur: Monnot, Jérôme, Cabinet BALLOT-SCHMIT, F-75116 Paris (FR); Sureaud, Jean, Cabinet BALLOT-SCHMIT, F-75116 Paris (FR)
(74) Mandataire: Schmit, Christian Norbert Marie

(56) Documents cités:
- WO-A-84/00229
- FR-A- 2 647 289
- US-A- 4 941 170
- US-A- 4 960 981
- RESEARCH DISCLOSURE. no. 302, Juin 1989, HAVANT, GB pages 461 - 462 'A method for prevention of unauthorized duplication of documents'
- PATENT ABSTRACTS OF JAPAN vol. 14, no. 368 (E-096)9 Août 1990 & JP-A-2 131 666 (MITSUBISHI ELECTRIC CORP.) 21 Mai 1990
- PATENT ABSTRACTS OF JAPAN vol. 10, no. 206 (P-478)18 Juillet 1986 & JP-A-61 046 553 (NEC CORP.) 6 mars 1986

## Description

La présente invention se rapporte aux procédés qui permettent de certifier, c'est-à-dire d'authentifier les messages transmis à l'aide des télécopieurs sur les lignes téléphoniques du réseau commuté. Elle concerne également les dispositifs permettant de mettre en oeuvre ce procédé.

La télécopie est un procédé qui se répand de plus en plus et qui permet de transmettre le contenu d'une feuille supportant du texte, aussi bien dactylographié que manuscrit, et même des figures, d'un endroit dans un autre à travers le monde entier en utilisant le réseau téléphonique commuté. Ce procédé encore appelé téléfax, en abrégé fax, consiste à analyser la surface de la feuille émise, selon un balayage semblable à un balayage de télévision, et à transmettre le contenu des lignes balayées point par point en codant la valeur lumineuse de chaque point. Grossièrement, on peut dire que un point à 0 correspond à un point blanc, et qu'un point à 1 à un point noir. A la réception, on reproduit ce balayage, avec les valeurs des points, sur un papier sensible qui restitue donc une image exacte, aux erreurs dues au tramage près, de l'original.

Ce procédé permettant la transmission des signatures, on pourrait penser qu'il présente une sûreté juridique suffisante. Ce n'est pas encore le cas car il est en fait assimilé à une photocopie dont on sait que si elle peut être prise en compte devant les tribunaux, sa valeur juridique à elle toute seule est insuffisante. D'ailleurs l'émetteur n'a pour seule preuve de la réception que le contenu succinct d'un bref accusé de réception indiquant que la copie a sans doute été bien reçue quelque part, en principe là où le numéro à été indiqué en tête du fax.

On sait par contre que le télex présente une garantie juridique beaucoup plus importante et est parfaitement admis par les tribunaux comme moyen de preuve tant du côté de l'émetteur que du côté du récepteur. Malheureusement, le télex est soumis à des limitations importantes. Il ne peut transmettre que les textes en majuscule avec un nombre réduit de signes de ponctuation et n'a aucune capacité graphique. Par ailleurs, l'abonnement est relativement cher, et il faut de plus disposer d'une machine particulière, laquelle ne peut être exploitée dans des conditions convenables que par un personnel relativement spécialisé.

Il y a donc un besoin important de pouvoir obtenir au niveau du fax la même sûreté juridique qu'au niveau du télex tout en disposant bien entendu des avantages particuliers du fax par rapport au télex.

Pour résoudre ce problème, l'invention propose un procédé de certification de messages transmis par télécopie, caractérisé en ce que
- on écrit en tête du message à transmettre un cartouche comportant des données alpha-numériques caractéristiques,
- on décode, du côté émetteur, des signaux correspondant à l'émission de ce cartouche,
- on crypte le contenu du cartouche ainsi décodé pour produire un sceau de certification, et
- on transmet au récepteur, vers la fin de transmission du message, des signaux codés au standard télécopie, afin de faire imprimer ledit sceau en bas du message reçu.

D'autres particularités et avantages de l'invention apparaîtront clairement dans la description suivante faite à titre d'exemple non limitatif en regard des figures annexées qui représentent :
- figure 1 : une représentation schématique d'un système certificateur selon l'invention ;
- figure 2 : les feuilles transmises et reçues avec ce système ;
- figure 3 : un organigramme des étapes du procédé de l'invention ;
- figure 4 : un organigramme d'une étape d'authentification de la certification acquise ;
- figure 5 : un procédé selon l'invention avec accusé de réception ;
- figure 6 : la structure d'un certificateur mettant en oeuvre le procédé de l'invention.

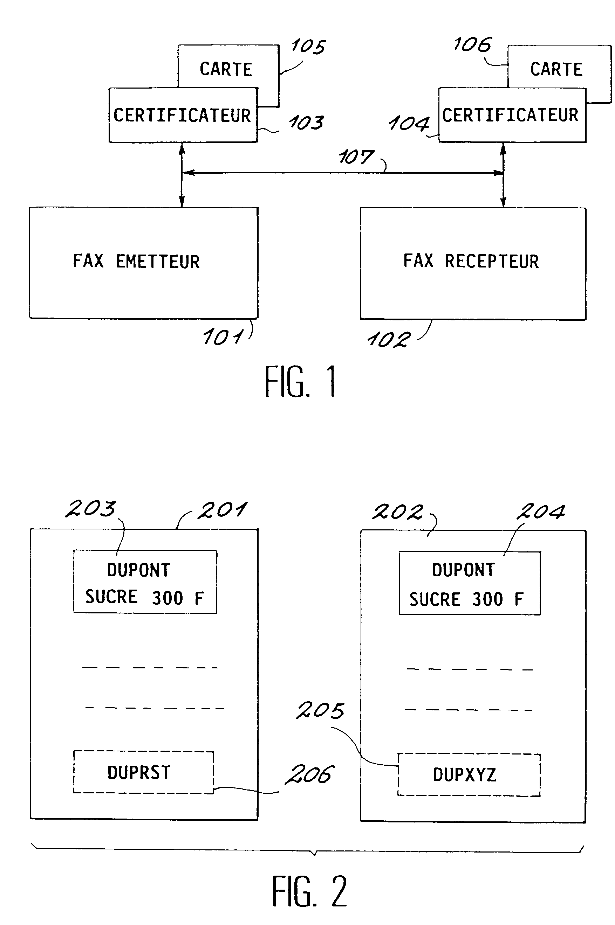

Le système représenté sous sa forme la plus complète sur la figure 1, comprend un fax émetteur 101 qui transmet un message, par exemple porté par une feuille 201 représentée sur la figure 2, vers un fax récepteur 102. Le document reçu est, par exemple, une feuille 202 représentée sur cette même figure 2. Branché en parallèle sur la ligne téléphonique 107 qui relie ces deux fax on trouve, à l'émission, un certificateur 103 et à la réception un certificateur 104. Ces certificateurs utilisent de préférence des moyens de cryptage comportant, par exemple, une carte à puce 105 à l'émission, et une carte à puce 106 en réception. On sait qu'actuellement les cartes à puces sont les moyens les plus pratiques qui permettent de détenir une clé de codage amovible utilisée pour des besoins de codage ou de cryptage dans un but de sécurité. On pourrait toutefois utiliser d'autres systèmes tel que par exemple un clavier permettant d'entrer directement un code sans même faire de cryptage.

Selon l'invention le message à transmettre, porté sur la feuille 101, comprend systématiquement un cartouche 203, formé par exemple d'un cadre rectangulaire comportant à l'intérieur un certain nombre d'inscriptions. Si le cartouche ne comporte pas de cadre, il comporte au moins un emplacement normalisé destiné à la certification. Les inscriptions portées dans le cartouche sont alpha-numériques et comportent, par exemple, une partie invariable, telle que dans cet exemple DUPONT, qui représente l'identification de l'émetteur, et des parties variables qui sont, au choix du rédacteur du message, et qui comporte de préférence les éléments essentiels du message sur lesquels on veut faire porter la certification. Dans cet exemple, on a écrit SUCRE et 300 F qui correspondrait, par exemple, à une commande dont l'élément essentiel est qu'elle porte sur du sucre pour une valeur de 300 Francs.

La feuille 201 est introduite dans le fax émetteur 101 de manière à ce que le côté comportant le cartouche 203 soit transmis en premier. Le fax émetteur 101 prend alors contact avec le fax récepteur 102, en échangeant d'abord un protocole d'identification normalisé et bien connu, puis la transmission commence. Les signaux correspondant au contenu porté par la feuille 201 sont émis sur la ligne de transmission 107. Ces signaux correspondent, comme on l'a vu plus haut, à une série de 1 et de 0 codés par un modem. Ils sont, généralement, préalablement soumis à un algorithme de compression, lui aussi tout à fait normalisé, par exemple de type HUFFMANN, qui permet d'accélérer la transmission en évitant par exemple de transmettre systématiquement des lignes toutes blanches ou des lignes toutes noires.

Lorsque les signaux correspondant au cartouche 203 sont émis sur la ligne, ils sont en même temps transmis au certificateur 103 qui a été mis en route préalablement, pendant le protocole d'identification, et qui attend donc de voir arriver à un moment opportun les signaux correspondant au bord horizontal supérieur du cartouche. Ce moment peut être synchronisé en détectant le passage du bord supérieur de la feuille 201 et en mesurant la vitesse d'avancement de cette feuille.

A partir de ce moment, qui correspond à une rupture bien caractéristique des signaux transmis, ceux-ci sont mis en mémoire dans le certificateur jusqu'à ce que la totalité des signaux correspondant au cartouche avec son contenu ait été transmis sur la ligne 107. On remarquera qu'il peut convenir, pour faire fonctionner au mieux l'invention, de ne rien inscrire sur la partie supérieure de la feuille 201 jusqu'au niveau inférieur du cartouche 230. Le certificateur comprend donc en mémoire, codé par des 1 et des 0, le dessin du cartouche avec son cadre et son contenu.

Le certificateur, qui comprend un système informatique de traitement de l'information, décode d'abord le contenu du cartouche en utilisant un système algorithmique de reconnaissance de forme. Différents algorithmes peuvent être utilisés, dont certains fonctionnent directement à partir des signaux compressés selon l'algorithme de compression des systèmes fax. Mais le plus simple, pour l'explication, consiste à reconstituer, dans un premier temps, dans la mémoire du système informatique du certificateur 103, le cartouche sous la forme d'une carte binaire en appliquant à l'envers l'algorithme de compression pour décomprimer les signaux émis par le fax. De préférence, on utilise les bits correspondants au cadre du cartouche comme système de synchronisation. En effet, ceux-ci sont bien reconnaissables et ils correspondent à des alignements sur la feuille 201. A partir du moment où on a une carte binaire du contenu du cadre on peut appliquer un des algorithmes de reconnaissance de forme dont on connaît dans l'art plusieurs variantes.

Un tel algorithme de reconnaissance reconnaît les inscriptions alpha-numériques aussi bien fixes comme DUPONT que variables comme SUCRE 300 F. Le résultat de cette reconnaissance, qui peut très bien porter sur des chiffres ou des lettres inscrites à la main, pourvu que l'écriture soit relativement standard, est mémorisé sous la forme d'une suite de codes binaires beaucoup plus courte que le contenu cartographique du cartouche tel qu'il a été obtenu à partir des signaux de ligne.

Cette suite courte de codes binaires fait alors l'objet, de préférence, d'un codage cryptographique. Ce codage cryptographique est effectué à partir d'un code d'identification contenu dans la carte 105. Ce code d'identification représente un élément sécurisé du système. Il est normalement attribué par l'autorité qui gère le réseau téléphonique auquel le fax 101 est branché. Cette carte 105 est possédée normalement par l'utilisateur qui ne la met dans le lecteur du certificateur que pour les besoins de la transmission certifiée. Au besoin, cette carte est une carte à prépaiement. Chaque certification conduit à l'oblitération d'une unité de prépaiement. Cette certification est alors payée, par avance, à l'autorité qui l'a délivrée. L'algorithme de cryptage est par exemple un algorithme de type RSA ou DES. Le résultat de ce codage cryptographique peut correspondre à une suite de mots binaires. Un de ces mots peut être intelligible : par exemple DUP dans l'exemple décrit. Une autre partie peut être inintelligible, et correspondre à une suite de lettres et/ou de chiffres, XYZ par exemple dans l'exemple décrit, apparemment sans signification pour le lecteur.

Ces caractères, DUPXYZ, sont alors mis sous la forme d'une carte binaire. Cette carte binaire représentera le sceau de certification 205 qui sera décrit plus loin. Ce codage caractère-carte binaire correspond à un codage inversée de celui de la reconnaissance de forme. Mais il est plus facile puisque cela correspond en fait à une même opération que celle qui sert par exemple à faire un affichage sur un moniteur de visualisation.

Lorsque l'ensemble de ces traitements est effectué, ce qui avec les systèmes informatiques modernes aussi bien au niveau du microprocesseur que des algorithmes, ne prend que quelques secondes, la carte binaire du sceau est mémorisée dans le certificateur jusqu'à ce que la transmission du message, qui s'est effectué entre temps, soit arrivée à quelques centimètres du bas de la feuille 201. En pratique, ce traitement détection-(compression-décompression)-reconnaissance de forme-cryptage du sceau-élaboration de la carte binaire prend de l'ordre de 1 seconde.

Avant l'arrivée du bas de la page, le certificateur envoie sur la ligne 107, en parallèle avec les signaux du fax 101, les signaux correspondant à la carte binaire du sceau, convenablement codés avec l'algorithme de compression fax. On peut utiliser cependant diverses méthodes et, par exemple, substituer l'émission du certificateur 103 à celle du fax 101 le temps que le sceau soit transmis.

A la réception, le fax 102 reçoit de la manière la plus courante le message comportant le cartouche 204 suivi du message proprement dit, et à la fin de celui-ci, un sceau 205, DUPXYZ, qui vient s'imprimer en bas de la page 202 alors qu'il n'était pas imprimé sur la page 201. Le sceau 205 peut aussi être encadré par une cartouche puis, la transmission étant terminée, les fax échangent leur signaux de fin de page et la communication peut s'arrêter là, à moins qu'il n'y ait des pages supplémentaires à transmettre pour lesquels le procédé selon l'invention peut s'appliquer de la même manière.

Le destinataire du message a donc en sa possession une feuille telle que 202 comportant, en haut, le cartouche 204 et en bas le sceau 205 avec entre les deux le texte du message. La présence du cartouche 204 et du sceau 205 lui indique qu'il s'agit d'un message transmis par des moyens certifiés dont l'authentification lui est donnée par le sceau 205. Il a donc en sa possession un message qui peut être considéré comme un original qui engage le destinataire de ce message.

Toutefois, on pourrait bien concevoir qu'un émetteur de mauvaise foi ait émis un tel message avec un cartouche 203 correct et un sceau 206 factice. Ce sceau factice 206 est montré en tirets sur la feuille 201 émise. Le sceau 206 est sans signification puisque une partie au moins de ce sceau, les lettres RST dans l'exemple, ne peuvent correspondre au contenu XYZ du cartouche 205 sous une forme régulièrement cryptée et qui n'est pas décryptable par l'émetteur fraudeur.

Si le destinataire souhaite avoir une réelle authentification du message, il ne peut bien entendu le faire lui-même puisque la clé qui permettrait le décryptage ne lui est pas connue. Pour cela, selon un perfectionnement de l'invention, le récepteur s'adresse à un centre serveur, à un service central de l'administration des postes par exemple, et lui communique d'une part le contenu du cartouche 204 : DUPONT SUCRE 300 F dans l'exemple, d'autre part le contenu du sceau, DUPXYZ dans l'exemple, et enfin l'identité, en clair, de l'émetteur. Ce centre serveur est en possession des algorithmes de cryptage et de toutes les clés des émetteurs et il peut alors en cryptant le contenu du cartouche avec la clé d'émetteur, donner une authentification officielle du cartouche et donc du message si le sceau est le même que le sceau 205. Différents procédés pour la communication avec ce centre serveur peuvent être utilisés, par exemple, de la même manière que l'on certifie actuellement par exemple les autorisations de paiement avec les cartes de crédit.

Le système le plus simple peut consister à s'adresser téléphoniquement à un opérateur en lui communiquant verbalement le contenu du cartouche et du sceau et l'identité de l'émetteur. L'opérateur entre alors ces contenus dans un système informatique contenant les algorithmes de cryptage et les clés et il délivre toujours verbalement le résultat de ses recherches. Celles-ci ne peuvent être confirmées par un courrier.

Une méthode plus élaborée peut consister tout simplement à retransmettre le fax reçu au centre serveur. Celui-ci fonctionnera automatiquement, comme le certificateur 103, en procédant à une analyse du cartouche pour obtenir des cartes binaires de ce cartouche et du sceau.

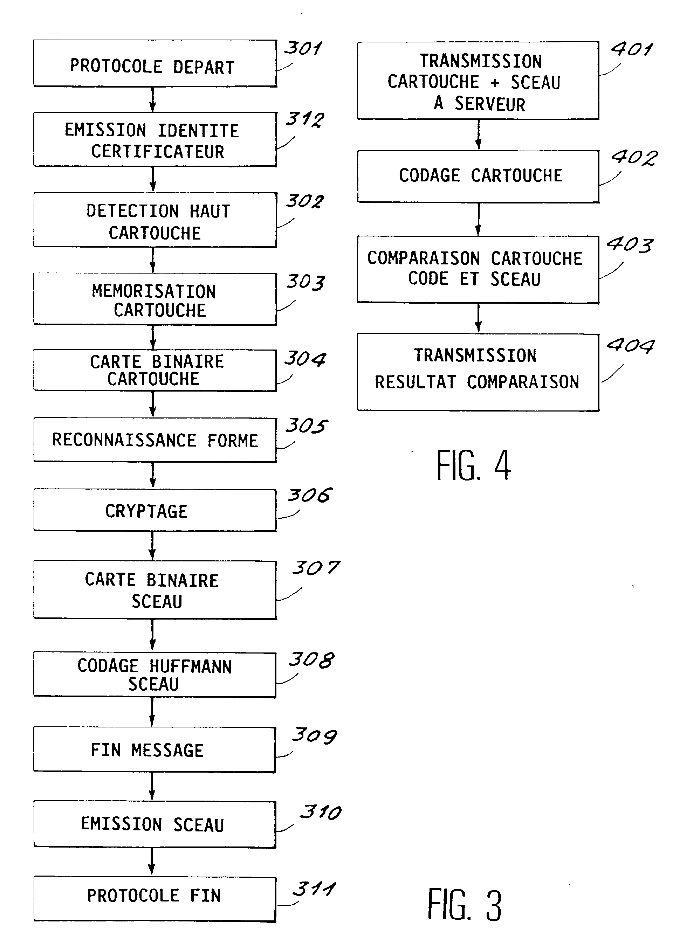

Le procédé de certification lors de la transmission du fax 101 au fax 102 correspond à l'organigramme de la figure 3 et le procédé de vérification au niveau du centre serveur à l'organigramme de la figure 4.

Le procédé décrit jusqu'à présent correspond à la version la moins élaborée de l'invention dans laquelle la certification ne se fait qu'au niveau de l'émetteur avec vérification par le récepteur. L'émetteur est muni des moyens nécessaires, le récepteur possède un fax simple. Il n'est pas possible d'effectuer une authentification au niveau du récepteur, parce que celui ci n'est pas muni des moyens particuliers de l'invention. Cette version est utilisable lorsque, dans un premier temps, on ne peut imaginer que tous les fax soient munis de ces moyens. On constate néanmoins que l'invention procure déjà des résultats appréciables lorsque le fax émetteur est muni de ces moyens. Ceux-ci permettent une mise en oeuvre progressive de l'invention au fur et à mesure que les fax seront équipés, sans attendre qu'il y ait un équipement pour tout le monde.

Dans une deuxième version plus complète, correspondant à la totalité de la figure 1, le fax récepteur est muni des mêmes moyens que le fax émetteur, c'est-à-dire un certificateur 104 pouvant aussi lire une carte à puce 106 contenant une clé de cryptage. Simplement, la programmation du certificateur 104 lui permet de remplir, en réception, des fonctions supplémentaires par rapport à celles qui sont décrites plus haut. Ces fonctions supplémentaires sont bien entendus programmées dès le départ dans le certificateur 103 de façon à ce que, lorsque tout le monde sera muni de tels appareils, la version la plus élaborée de l'invention puisse fonctionner sans modification de l'appareillage.

Dans cette version plus élaborée, on prévoit donc que le certificateur émetteur 103 rajoute au protocole standard de début de prise de ligne entre les fax un signal, un mot binaire par exemple. Ce signal s'insère à une place libre entre les différentes données échangées et prévues pour accorder entre autre les deux fax. Ceci correspond à l'étape 312 de la figure 3.

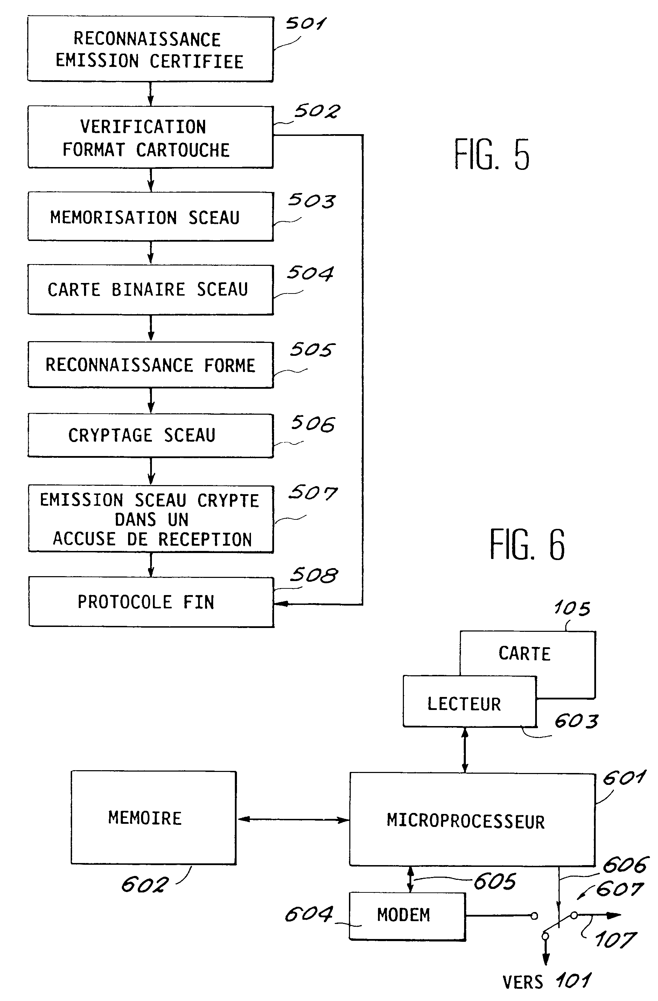

Ce signal est reconnu dans l'étape 501 de l'organigramme de la figure 5 qui représente l'envoi de l'accusé de réception. Le fax récepteur 102 sachant qu'il doit recevoir un message certifié, commence donc par vérifier l'arrivée du cartouche en en-tête dans une étape 502. Ceci lui permet de contrôler le bon état de la transmission par une vérification plus ou moins approfondie selon les possibilités de l'algorithme de reconnaissance de forme, par exemple sur la rectitude du rectangle formant l'entourage du cartouche. De cette manière, si ce rectangle est trop déformé, indiquant une mauvaise transmission, le récepteur en tiendra compte lors de la transmission de l'accusé de réception comme on va le voir après.

La réception du message se déroule ensuite normalement et, lorsque l'on arrive au sceau dont on rappelle qu'il se trouve toujours au même endroit sur la feuille 202, le certificateur 104 mémorise les signaux compressés correspondant à la transmission de ce sceau dans une étape 503. Ces signaux mémorisés sont alors décompressés, ce qui permet d'obtenir une carte binaire du sceau dans l'étape 504, de la même manière qu'on a obtenue une carte binaire du cartouche dans l'étape 304 à l'émission principale.

On peut alors procéder à une reconnaissance de forme, dans une étape 505 de cette carte binaire. Ceci permet d'obtenir, en clair et non plus sous forme graphique, la suite de caractères formant le contenu du sceau, soit dans l'exemple DUPXYZ.

Le certificateur 104 du récepteur procède alors au cryptage du contenu de ce sceau DUPXYZ en y rajoutant sa propre identification dans une étape 507. Cette étape 507 est nécessaire pour éviter qu'un récepteur quelconque n'adresse un accusé de réception faux vers l'émetteur. Elle est effectuée selon la clé de cryptage de la carte 106.

L'accusé de réception crypté provenant de ce traitement est ensuite réémis vers le fax émetteur 101, sous la forme d'une série de caractères, par exemple codés en ASCII, insérés dans les accusés de réception normaux du fax. On sait en effet que les fax normaux comporte une mémoire dans laquelle on peut introduire différentes informations telles que le nom du propriétaire du fax et son numéro d'appel. Ces informations sont actuellement à la disposition du propriétaire et il arrive souvent qu'il les laisse à blanc. Le plus pratique dans la mise en oeuvre de l'invention sera effectivement de laisser à blanc une partie de ces informations. Ceci donnera de la place au certificateur pour transmettre les informations cryptées qu'il vient de définir vers le fax 101. On remarque que cette émission est beaucoup plus facile puisqu'il n'y a plus besoin de repasser par une carte binaire suivie d'une compression car les informations en question sont directement transmises en alpha-numériques sur la ligne, par l'intermédiaire de l'accusé de réception standard prévu sur tous les fax.

Après cette étape 507 une dernière étape 508 correspond au protocole de fin par lequel les deux fax se libèrent de la liaison. On a séparé, pour les besoins de l'explication, la transmission de l'accusé de réception dans l'étape 507 de celle du protocole de fin dans l'étape 508. Mais il est courant de considérer que l'accusé de réception fait partie du protocole de fin.

En outre, comme on dispose en ce moment de l'information de vérification du format de cartouche obtenu dans l'étape 502, celle-ci peut être introduite dans le protocole de fin à l'étape 508 puisque ce protocole comprend effectivement la transmission éventuelle d'une information selon laquelle l'émission a été mal reçue. Cette information est actuellement obtenue à partir de la détection de divers incidents de réception et l'addition de cette condition supplémentaire correspond simplement à un simple "OU" logique que l'on peut obtenir sans aucune espèce de difficulté particulière.

Le fax émetteur 101 reçoit donc dans son accusé de réception, outre la mention (éventuelle) "copie bien reçue", une suite de caractères correspondant au cryptage des informations contenues dans le cartouche qu'il a émis précédemment et de l'identification de son correspondant. Il peut alors faire vérifier auprès du centre serveur le contenu de cette suite de caractères de la même manière que le possesseur du fax récepteur a vérifié, auprès du centre serveur, la validité du sceau émis. Simplement, il y aura lieu de prévoir dans ce cas que le centre serveur réémettra non pas un signal d'acquiescement mais le contenu de l'accusé de réception correctement décrypté.

On a représenté sur la figure 6 un exemple de réalisation d'un certificateur tel que 103. Celui-ci comprend essentiellement un microprocesseur 601 muni d'une mémoire 602 qui contient les programmes permettant de le faire fonctionner. Un lecteur de carte à puce 603 permet de lire la carte 105 et de communiquer au microprocesseur diverses informations et en particulier les clés nécessaires au fonctionnement de l'algorithme de cryptage. Les informations, provenant tant du fax 101 que de la ligne 107, sont orientées vers le microprocesseur à l'aide d'un interrupteur 607, qui permet de mettre en liaison, selon les besoins de la séquence, la ligne 107 avec le fax 101 ou avec un modem 604 qui permet de convertir les signaux analogiques du fax et de la ligne en signaux numériques susceptibles d'être compris par le microprocesseur. Ce modem est du type réversible, c'est-à-dire qu'il transmet aussi bien les signaux vers le microprocesseur que les signaux du microprocesseur vers le fax ou la ligne par l'intermédiaire d'une liaison 605 qui le relie au microprocesseur. Ce microprocesseur comprend entre autre une ligne de commande 606 qui permet de faire fonctionner le commutateur 607.

## Revendications

1. Procédé de certification de messages transmis par télécopie, caractérisé en ce que
- on écrit en tête du message à transmettre (201) un cartouche (203) comportant des données alpha-numériques caractéristiques,
- on décode (302)-(305), du côté émetteur (101), des signaux correspondant à l'émission de ce cartouche,
- on crypte (307) le contenu du cartouche ainsi décodé pour produire un sceau de certification, et
- on transmet au récepteur (102), vers la fin de transmission du message, des signaux codés au standard télécopie, afin de faire imprimer ledit sceau en bas du message reçu (202).

2. Procédé selon la revendication 1, caractérisé en ce que le cartouche (203) est inscrit à l'intérieur d'un cadre de dimension constante et identique pour tous les messages.

3. Procédé selon l'une quelconque des revendications 1 et 2, caractérisé en ce que
- le contenu du cartouche est transformé en une carte binaire (304) et,
- on applique à celle-ci un procédé de reconnaissance de forme (305) qui permet de retrouver les données alpha-mumériques qui y sont contenues.

4. Procédé selon l'une quelconque des revendications 1 à 3, caractérisé en ce que le contenu crypté du cartouche est transformé en une carte binaire (307) destinée à être transmise point par point (310) selon le code télécopie.

5. Procédé selon l'une quelconque des revendications 1 à 4, caractérisé en ce que pour authentifier le sceau
- on transmet à un centre serveur (401) le contenu du cartouche et du sceau, et l'identification de l'émetteur,
- ce centre serveur effectue une comparaison (403) du sceau avec le contenu du cartouche préalablement codé selon le même code qu'à l'émission (402) et,
- le centre serveur envoie les résultats de cette comparaison (404) au récepteur (102).

6. Procédé selon l'une quelconque des revendications 1 à 5, caractérisé en ce que, pour authentifier la réception du côté émetteur,
- on décode (503-505), du côté récepteur (102), les signaux correspondant à la réception du sceau,
- on utilise (506) le contenu de ce sceau pour produire un accusé de réception, et
- on transmet vers l'émetteur (507), après la fin de réception du message, et avant la fin de la transmission (508), des données alpha-numériques représentant cet accusé de réception, et
- on imprime cet accusé de réception dans l'accusé de réception standard du télécopieur émetteur.

7. Procédé selon la revendication 6, caractérisé en ce qu'on procède à la vérification du format du cartouche reçu (502) pour émettre un signal de mauvaise réception si ce format est déformé au-delà d'une certaine limite.

8. Procédé selon l'une quelconque des revendications 1 à 7, caractérisé en ce que le contenu du cartouche est crypté avec d'autres éléments pour produire le sceau ou l'accusé de réception.

9. Procédé selon l'une quelconque des revendications 1 à 8, caractérisé en ce qu'on décompte des unités de comptage dans une carte à puce à chaque certification.

10. Dispositif pour la mise en oeuvre du procédé selon l'une quelconque des revendications 1 à 7, caractérisé en ce qu'il comprend des moyens de traitement informatique (601, 602), un modem réversible (604) permettant de relier les moyens de traitement informatique au télécopieur-émetteur (101) ou à la ligne d'émission (107) par l'intermédiaire d'un commutateur (607) et un lecteur de carte à puce (603) permettant d'introduire dans les moyens de traitement informatique la clé de cryptage portée par une carte à puce (105).

## Claims

1. A method for the certification of messages sent by facsimile transmission, wherein:
- an insert or box (203) comprising characteristic alphanumerical data elements is written at the head of the message to be transmitted,
- on the sender side (104), signals corresponding to the transmission of this box are decoded (302)-(305),
- the contents of the box thus decoded are encrypted (307) to produce a certification seal, and
- towards the end of the transmission of the message, signals encoded according to the facsimile transmission standard are transmitted to the receiver (102) in order to print said seal at the bottom of the received message (202).

2. A method according to claim 1, wherein the box is inscribed within a frame with a dimension constant and identical for all the messages.

3. A method according to either of claims 1 and 2, wherein:
- the contents of the box are converted into a binary map (304), and
- a shape-recognition (305) method is applied to this binary map, enabling the alphanumerical data elements contained therein to be retrieved.

4. A method according to any one of claims 1 to 3, wherein the encrypted contents of the box are converted into a binary map (307), designed to be sent dot by dot (310) according to the facsimile transmission code.

5. A method according to any one of claims 1 to 4 wherein, to authenticate the seal
- the contents of the box and of the seal and the identification of the transmitter are sent to an information retrieval centre (401),
- this information retrieval centre makes a comparison (403) of the seal with the contents of the box, encoded beforehand according to the same code as at transmission, and
- the information retrieval centre sends the results of this comparison (404) to the receiver (102).

6. A method according to any one of claims 1 to 5 wherein, to authenticate the reception on the sender side,
- signals corresponding to the reception of the seal are decoded (503-505) on the receiver side,
- the contents of this seal are used (406) to produce an acknowledgement of receipt, and
- alphanumerical data elements representing this acknowledgement of receipt are conveyed towards the transmitter after the end of the reception of the message and before the end of the transmission (508), and
- this acknowledgement of receipt is printed in the standard acknowledgement or receipt of the transmiter facsimile machine.

7. A method according to claim 6, wherein the format of the box received is checked in order to send a signal of poor reception if this format is distorted beyond a certain limit.

8. A method according to any one of claims 1 to 7, wherein the contents of the box are encrypted with other elements to produce the seal or the acknowledgement of receipt.

9. A method according to any one of claims 1 to 8, wherein accounting units are counted out in a chip card at each certification.

10. A device for the performance of the method according to any one of claims 1 to 7, comprising data-processing means (601, 602), a reversible modem (604) enabling the data-processing means to be connected to the facsimile transmitter or to the transmission line (107) by means of a switch (607) and a chip card reader (603) enabling the encryption key borne by a chip card (105) to be introduced into the data-processing means.

## Patentansprüche

1. Verfahren zur Beglaubigung von mittels Fernkopie übertragenen Nachrichten, dadurch gekennzeichnet, daß
- im Kopf der zu übertragenden Nachricht (201) ein Schriftfeld (203) eingeschrieben wird, welches charakteristische alphanumerische Zeichen enthält,
- auf der Senderseite (101) Signale decodiert werden (302-305) entsprechend der Übertragung dieses Schriftfeldes,
- der Inhalt des derart decodierten Schriftfeldes verschlüsselt wird (307), um eine Beglaubigungsbestätigung herzustellen und
- zum Empfänger (102) am Ende der Nachrichtenübermittlung die gemäß dem Fernkopierer-Standard codierten Signale übertragen werden, um am Ende der erhaltenen Nachricht (202) die Bestätigung ausdrucken zu lassen.

2. Verfahren nach Anspruch 1, dadurch gekennzeichnet, daß das Schriftfeld (203) im Inneren eines Rahmens konstanter Abmessung eingeschrieben wird, der identisch ist für alle Nachrichten.

3. Verfahren nach einem der Ansprüche 1 und 2, dadurch gekennzeichnet, daß
- der Inhalt des Schriftfeldes in eine Binärkarte (304) umgewandelt wird und
- diese einem Form-Erkennungsverfahren (305) ausgesetzt wird, welches es ermöglicht, die darin enthaltenen alphanumerischen Zeichen wieder zu finden.

4. Verfahren nach einem der Ansprüche 1 bis 3, dadurch gekennzeichnet, daß der verschlüsselte Inhalt des Schriftfeldes in eine Binärkarte (307) umgewandelt wird, welche punktweise (310) gemäß dem Fernkopierer-Code übertragen wird.

5. Verfahren nach einem der Ansprüche 1 bis 4, dadurch gekennzeichnet, daß zur Erkennung der Bestätigung
- der Inhalt des Schriftfeldes und der Bestätigung sowie die Identifizierung des Absenders einem Dienstleistungszentrum (401) übermittelt wird,
- dieses Dienstleistungszentrum einen Vergleich (403) der Bestätigung mit dem Inhalt des vorher codierten Schriftfeldes mit demselben Code wie beim Absenden (402) durchführt und
- das Dienstleistungszentrum die Ergebnisse dieses Vergleichs (404) dem Empfänger (102) zuschickt.

6. Verfahren nach einem der Ansprüche 1 bis 5, dadurch gekennzeichnet, daß zur Erkennung des Empfangs auf der Senderseite
- auf der Seite des Empfängers (102) die dem Empfang der Bestätigung entsprechenden Signale decodiert werden (503-505),
- der Inhalt dieser Bestätigung verwendet wird (506), um eine Empfangsbestätigung herzustellen und
- nach dem Ende des Nachrichtenempfangs und vor dem Ende der Übertragung (508) dem Sender (507) alphanumerische Zeichen übermittelt werden, welche diese Empfangsbestätigung darstellen und
- diese Empfangsbestätigung in die herkömmliche Empfangsbestätigung des senderseitigen Fernkopierers eingedruckt wird.

7. Verfahren nach Anspruch 6, dadurch gekennzeichnet, daß die Erkennung des Formats des erhaltenen Schriftfeldes durchgeführt wird (502), um ein Signal für einen schlechten Empfang dieses Formats zu erzeugen, sofern es jenseits einer bestimmten Grenze liegt.

8. Verfahren nach einem der Ansprüche 1 bis 7, dadurch gekennzeichnet, daß der Inhalt des Schriftfeldes mit anderen Elementen verschlüsselt wird, um die Bestätigung oder die Empfangsbestätigung herzustellen.

9. Verfahren nach einem der Ansprüche 1 bis 8, dadurch gekennzeichnet, daß man die Zähleinheiten bei jedem Beglaubigungsvorgang in eine Chipkarte einträgt.

10. Vorrichtung zur Durchführung des Verfahrens nach einem der Ansprüche 1 bis 7, dadurch gekennzeichnet, daß sie eine Informationsverarbeitungsanordnung (601, 602) aufweist, ein reversibles Modem (604), welches die Informationsverarbeitungsanordnung mit dem Sendefernkopiergerät (101) oder der Übertragungsleitung (107) über einen Umschalter (607) verbindet, sowie einen Chipkartenleser (603) aufweist, der das Einlesen der mit der Verschlüsselung versehenen Chipkarte (105) in die Informationsverarbeitungsanordnung ermöglicht.
